# EUROPÄISCHE PATENTANMELDUNG

(11) **EP 3 557 085 A1**
(43) Veröffentlichungstag der Anmeldung: **23.10.2019**
(21) Anmeldenummer: 19000082.8
(22) Anmeldetag: 13.02.2019
(51) Int. Cl.: F16B 13/14, F16B 13/12, F16B 13/00

(54) **DÜBELANORDNUNG**

(30) Priorität: 17.04.2018 CH 4872018
(71) Anmelder: Colux GmbH, 78224 Singen (DE)
(72) Erfinder: Lechner, Roland, DE - 78224 Singen (DE)
(74) Vertreter: Hering, Hartmut

(57) **Zusammenfassung**

Die Erfindung betrifft eine Dübelanordnung (1) mit einem Kunststoffdübel (2) zum Verankern in einer Bohrung, zumindest einer mit Klebstoff (K) gefüllten Kammer (11) und einem die Kammer (11) hermetisch abdichtenden Verschlussorgan. Die einen integralen Bestandteil des Kunststoffdübels (2) bildende Kammer (11) ist mit zumindest einer Sollbruchstelle (13) versehen, welche derart ausgebildet ist, dass sie beim Komprimieren des in der jeweiligen Kammer (11) aufgenommenen Klebstoffs (K) aufreisst und/oder durch Eindrehen einer Schraube (18) mechanisch aufgebrochen wird.

## Beschreibung

Die vorliegende Erfindung bezieht sich auf einen gemäss dem Oberbegriff des Anspruchs 1 ausgebildete Dübelanordnung und ein im Oberbegriff des Anspruchs 16 definiertes Verfahren zum Herstellen einer Dübelanordnung.

Konventionelle Dübel wie beispielsweise Spreizdübel werden in ein Bohrloch eingeführt, wo sie durch Eindrehen einer Schraube aufgespreizt und in dem Bohrloch verankert werden. Zumeist sind solche Spreizdübel zur Bildung des aufzuspreizenden Bereichs mit Längsschlitzen versehen, mittels welchen zwei oder mehr Spreizschenkel gebildet werden. Ein grundsätzlicher Nachteil der Spreizdübeln anhaftet besteht darin, dass sie in gewissen Materialen wie beispielsweise Leichtbaumaterialien oder Hohlblocksteinen nur einen ungenügenden Halt finden.

Zur Lösung dieses Problems gibt es Dübelanordnungen in der Form von chemischen Befestigungen. Diese umfassen eine Siebhülse, die in das Bohrloch gesteckt und danach mit Klebstoff gefüllt werden. Meistens handelt es sich dabei um 2K-Kleber wie z.B. Epoxyacrylat oder Polyester. In den noch flüssigen oder pastösen Kleber wird eine Schraube gesteckt. Nach der Härtung ist eine stabile Befestigung entstanden. Nachteil ist, dass man eine genau definierte Menge Kleber einbringen muss. Dabei passieren Fehler und die Befestigung hält nicht. Außerdem ist der Kleber in großen Kartuschen verpackt, die sich nur mit teurem Auspressgerät verarbeiten lassen.

Des Weiteren sind auch Dübelanordnungen bekannt, die einen Spreizdübel und zusätzlich eine oder mehrere mit Klebstoff gefüllten Ampullen oder dergleichen umfassen. Die Ampullen sind jeweils als separate Elemente ausgebildet, welche innen und/oder aussen an dem Spreizdübel angebracht werden. Das Aufbrechen der Ampullen erfolgt jedoch zumeist undefiniert und auch das Austreten und Verteilen des Klebstoffs erfolgt eher zufällig.

Obwohl derartige Dübelanordnungen gegenüber einem herkömmlichen, ohne Kleber versehenen Spreizdübel für bestimmte Einsatzzwecke durchaus Vorteile haben dürfte, funktionieren sie nicht in allen Anwendungsfällen zuverlässig, da das Aufbrechen von aussen angebrachten Ampullen beispielsweise bei Hohlblocksteinen nicht immer funktioniert und andererseits der Klebstoff nicht definiert verteilt wird bzw. nicht zwingend in denjenigen Bereich oder diejenigen Bereiche vordringt, in denen auch wirklich eine Verklebung zwischen Dübel und Lochwand stattfinden kann, sondern der Kleber beispielsweise in den vorhandenen Hohlraum bzw. die vorhandenen Hohlräume vordringt und sich dort verteilt.

So ist aus der DE 10 2016 002 835 A1 eine Spreizdübel genannte Dübelanordnung bekannt, bei der am Aussenmantel des Spreizdübels mehrere schlauchförmige Kleberpatronen verteilt sind. Die Kleberpatronen sollen beim Spreizen des Dübels durch den Anpressdruck an der Lochwand zerstört werden, so dass der darin aufgenommene Kleber austreten kann, um eine Verklebung des Dübels in dem Loch zu erreichen.

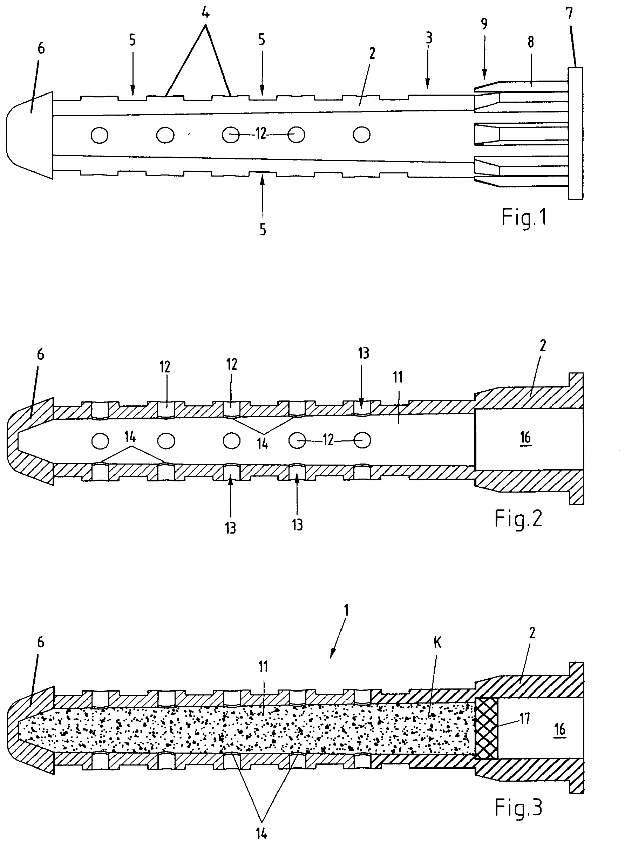

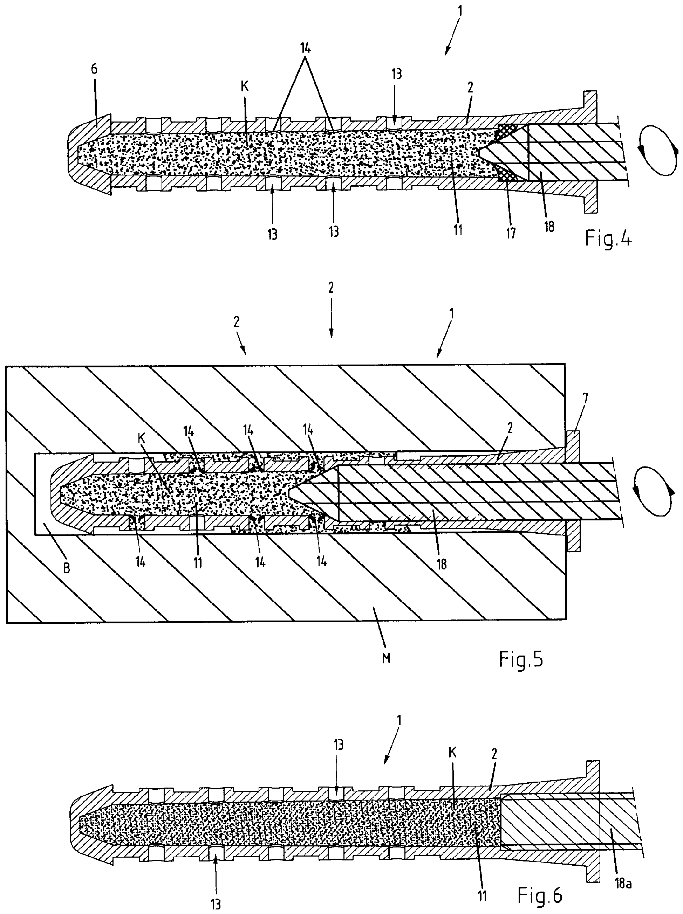

Die DE 10 2006 060 537 A1 offenbart zwei grundsätzlich unterschiedliche Ausführungsformen eines als Siebhülse ausgebildeten Dübels. Gemäss einer ersten Ausführungsform (Figuren 1 bis 4) ist der Dübel mit einer Aussenhülse und einer Innenhülse versehen. Die Aussenhülse ist mit durchgehenden Löchern versehen, während die Innenhülse ebenfalls Löcher aufweist. Im Ausgangszustand ist der Innenhülse derart in die Aussenhülse eingesetzt, dass die Löcher der der Innenhülse nicht mit den Löchern der Aussenhülse fluchten, sondern dass die Innenhülsenlöcher durch die Aussenhüllenwand verschlossen sind und ein in der Innenhülse aufgenommener Klebstoff nicht austreten kann. Nach dem Entfernen eines Sicherungsrings kann die Innenhülse vollständig in die Aussenhülse eingeschoben werden, so dass die Löcher nunmehr miteinander fluchten und der in der Innenhülse aufgenommene Klebstoff über die Löcher aus dem Dübel austreten kann, wenn eine Schraube in den Dübel eingeschraubt wird. Die Figuren 5 bis 8 zeigen eine zweite Ausführungsform des Dübels. Die Aussenhülse ist wiederum mit Löchern versehen, welche jedoch mittels einer Folie verschlossen sind. In die Aussenhülse ist eine Spreizhülse eingesetzt, welche mit Vorsprüngen versehen ist, die in der Ausbildung und Lage derart auf die Löcher der Aussenhülse abgestimmt sind, dass beim Eindrehen einer Schraube die Vorsprünge der Spreizhülse die Folie durchstossen und ein in der Aussenhülse aufgenommener Klebstoff austreten kann.

Die DE 40 06 506 A1 offenbart einen Dübel, der mit zwei abgedichteten Kammern zur Aufnahme von zwei miteinander reagierenden Kleberkomponenten versehen ist. Die jeweilige Klebstoffkomponente ist in einer Kammer genannten Patrone aufgenommen. Das Aufbrechen der Kammern erfolgt mittels einer Innenhülse, die eine mit Mischflügeln versehene Spitze aufweist. Nach dem Aufbrechen der Kammern kann der aufschäumende Klebstoff über Ausnehmungen aus dem Dübel austreten. Bei einer alternativen Variante des Dübels ist in dessen Spitze eine Ausdrücköffnung angeordnet, die von einem Blähschlauch umgeben ist. Des Weiteren sind die ebenfalls vorhandenen Ausnehmungen mittels eines Verschlusses verschlossen, wobei der Verschluss durch einen Druckaufbau im Dübelinnern geöffnet wird. Der Verschluss ist als Gummiring ausgebildet.

Die US 2,092,341 A beschreibt eine Wandfliese an der eine mit Klebstoff gefüllte Vorrichtung (Aufhänger) angebracht ist. Die Fig. 3 und 4 zeigen einen Kupfer-Dübel, in dem eine mit Klebstoff gefüllte Kapsel aufgenommen ist. Die Wandung des Dübels ist mit Löchern versehen, über welche der Klebstoff nach dem Aufbrechen der Kapsel austreten kann.

Schliesslich befasst sich die EP 2 597 322 A2 mit einer Gewindesicherung, indem der Gewindeteil einer Schraube, Mutter oder dergleichen zumindest teilweise mit einem Überzug versehen wird, in dem sich Mikrokapseln befinden. Zumindest ein Teil dieser Mikrokapseln enthält einen polymerisierbaren Klebstoff. Das Gewinde ist zudem mit einer nicht-reaktiven, eine Klemmwirkung erzeugenden Beschichtung versehen.

Aufgabe der Erfindung ist es, eine dem eingangs genannten technischen Gebiet zugehörenden Dübelanordnung zu schaffen, welche einfach in der Anwendung ist und einer sichere Verankerung in unterschiedlichstem Mauerwerk und dergleichen ermöglicht, indem einerseits ein sicheres Aufbrechen der Klebstoffkammer(n) sichergestellt und andererseits eine definiertes Austreten und Verteilen des Klebers über die Länge des Dübels sowie entlang seines Umfangs erreicht werden soll.

Die Lösung der Aufgabe ist durch die Merkmale des Anspruchs 1 definiert. Gemäss der Erfindung ist die Dübelanordnung mit einem Kunststoffdübel zum Verankern in einer Bohrung und zumindest einer mit Klebstoff gefüllten Kammer versehen, welche beim Eindrehen einer Schraube aufgebrochen wird, so dass der Klebstoff aus dem Kunststoffdübel austreten kann, wobei der Kunststoffdübel mit zumindest einer integralen Kammer versehen ist, welche mit Klebstoff gefüllt und mittels eines Verschlussorgans dicht verschlossen ist, und wobei die Kammer zumindest eine Sollbruchstelle aufweist, welche derart ausgebildet ist/sind, dass sie beim Komprimieren des in der jeweiligen Kammer aufgenommenen Klebstoffs aufreisst/aufreissen und/oder durch Eindrehen einer Schraube mechanisch aufgebrochen wird/werden. Ein derartiger Dübel ist vergleichsweise einfach und kostengünstig herzustellen, zumal das zum Aufbrechen der Sollbruchstellen vorgesehene Element -Schraube- gleichzeitig als Befestigungs- oder Aufhängeorgan dienen kann.

Bevorzugte Ausführungsformen und Weiterbildungen der Dübelanordnung sind in den abhängigen Ansprüchen umschrieben.

Eine besonders bevorzugte Weiterbildung sieht vor, dass der Kunststoffdübel als Spreizdübel ausgebildet ist. Mit einer solchen Ausbildung kann eine zweifache Verankerung des Dübels erreicht werden, indem dieser sowohl durch Kleben wie auch mechanisch in der Bohrung verankert/fixiert wird.

Bei einer anderen Weiterbildung ist vorgesehen, dass der Kunststoffdübel mehrere in axialer Richtung über die Länge der Kammer und/oder in radialer Richtung über den Umfang der Kammer verteilte Sollbruchstellen aufweist. Durch das Vorsehen von mehreren Sollbruchstellen in der genannten Art soll sichergestellt werden, dass der in der Kammer aufgenommene Klebstoff an unterschiedlichen Stellen verteilt aus dem Dübel austritt, was insbesondere dann von Vorteil ist, wenn der Dübel nicht in eine durchgehende Bohrung eingesetzt ist, sondern die Bohrung bzw. die Bohrungswandung unterbrochen ist, da diese beispielsweise durch einen Hohlblockstein oder einen mit Hohlräumen versehenen Backstein verläuft.

Eine weitere, bevorzugte Weiterbildung der Dübelanordnung sieht vor, dass der Kunststoffdübel zumindest eine geradlinig oder schraubenförmig entlang der Kammer verlaufende Sollbruchstelle aufweist. Eine derartige Sollbruchstelle bzw. Sollbruchstellen eignen sich im Besonderen, dass sie nach und nach von hinten nach vorne von der in den Dübel eingedrehten Schraube aufgebrochen werden, wodurch wiederum sichergestellt werden kann, dass der in der Kammer aufgenommene Klebstoff an unterschiedlichen Stellen verteilt aus dem Dübel austritt.

Vorzugsweise ist die jeweilige Sollbruchstelle als von aussen in die Mantelfläche des Kunststoffdübels eingelassene Ausnehmung oder Vertiefung ausgebildet. Dies ist eine einfache und kostengünstige Variante zur Ausbildung der Sollbruchstellen, welche sich insbesondere auch im Zusammenhang mit Spritzgiessen zur Herstellung des Kunststoffdübels eignet.

Besonders bevorzugt ist das Verschlussorgan ein Stopfen oder eine Schraube. Ein solches Verschlussorgan ist einfach anzubringen und kostengünstig in der Realisierung.

Eine weitere bevorzugte Ausbildung der Dübelanordnung besteht darin, dass diese eine das Aufbrechen und Austragen des Klebstoffs bewirkende Schraube umfasst, wobei der Klebstoff durch radikalische Härtung aushärtbar ist und der Schraubenschaft der Schraube zumindest teilweise mit einer das Aushärten des Klebstoffs initiierenden Schicht vorbehandelt oder beschichtet ist. Dadurch kann auf einfache und kostengünstige Weise ein schnelles Aushärten des Klebstoffs erreicht werden.

Alternativ kann die Dübelanordnung eine das Aufbrechen und Austragen des Klebstoffs bewirkende Schraube umfassen, wobei der Schraubenschaft zumindest teilweise mit einem ein Anhaften des in der Kammer aufgenommenen Klebstoffs an der Schraube verhindernden Trennmittel vorbehandelt oder beschichtet ist. Dadurch kann ein Anhaften des Klebstoffs an der Schraube verhindert werden, was in Bezug auf ein Austauschen der Schraube vorteilhaft ist.

Besonders bevorzugt ist das Verschlussorgan eine Schraube, deren Gewinde-Aussendurchmesser grösser ist als der Innendurchmesser der Kammer des Kunststoffdübels. Schrauben sind als Standardbauteile sehr kostengünstig und in unzähligen Varianten erhältlich. Zudem wird durch das genannte Merkmal ein mechanisches Aufbrechen der Sollbruchstellen ermöglicht.

Ganz besonders bevorzugt dient die Schraube als Austragsorgan für den in der Kammer aufgenommenen Klebstoff. Neben den bereits erwähnten grundsätzlichen Vorteilen einer Schraube kann die Schraube in zweifacher Hinsicht genutzt werden, nämlich als Verschlussorgan und als Austragsorgan.

Eine bevorzugte Ausbildung des Kunststoffdübels sieht vor, dass dieser entlang der äusseren Mantelfläche verlaufende axiale und/oder radiale Erhebungen und/oder Vertiefungen aufweist. Solche Erhebungen und/oder Vertiefungen begünstigen das verteilen des Klebstoffs zwischen Bohrungswand und Mantelfläche des Dübels.

Vorzugsweise ist der Kunststoffdübel einstückig ausgebildet und auf der Aussenseite mit als Verdrehsicherung dienenden Erhebungen versehen. Diese Ausbildung ist im Hinblick auf die Herstellungskosten vorteilhaft. Zudem kann durch die Erhebungen sichergestellt werden, dass eine Schraube in den Dübel hineingedreht werden kann, ohne dass sich der Dübel dabei verdreht.

Bei einer weiteren, bevorzugten Variante ist vorgesehen, dass der Kunststoffdübel zwei axial hintereinander angeordnete Kammern aufweist, wobei die vordere Kammer der Vorderseite des Dübels zugewandt ist, während die hintere Kammer der Rückseite des Dübels zugewandt ist, wobei in der vorderen Kammer eine erste Komponente und in der zweiten Kammer eine weitere Komponente zur Bildung eines 2-K Klebstoffs aufgenommen ist. Neben den grundsätzlichen Vorteilen eines mit einem 2-K Klebstoff versehenen Dübels lässt sich ein solcher Dübel auch vergleichsweise einfach herstellen.

Vorzugsweise ist bei dem 2-K Dübel in die hintere, der Rückseite des Dübels zugewandte Kammer eine mit der weiteren Komponente gefüllte Patrone eingesetzt, wobei die Patrone gleichzeitig als Verschlussorgan für die vordere Kammer ausgebildet ist. Eine derartige Patrone ist einfach und kostengünstig in der Herstellung. Zudem wird die Patrone zweifach genutzt, namentlich zur Aufnahme der einen Komponente eines 2-K Klebstoffs und zudem auch als Verschlussorgan für die eine Kammer. Vorzugsweise ist bei einem solchen 2-K Dübel die hintere, der Rückseite des Dübels zugewandte Kammer mittels einer Schraube verschlossen, wobei die Schraube als Mischorgan zum Durchmischen und Austragen der beiden Komponenten dient. Dadurch dient die Schraube als Verschlussorgan und das Gewinde wird als Misch- und Austragsorgan genutzt.

Eine weitere Aufgabe der Erfindung besteht darin, ein Verfahren zum Herstellen einer Dübelanordnung mit einem Kunststoffdübel, zumindest einer mit Klebstoff gefüllten Kammer und einem die Kammer verschliessenden Verschlussorgan vorzuschlagen, welches sich insbesondere für die Grossserienherstellung unter Berücksichtigung der Herstellungskosten eignet.

Die Lösung der Aufgabe ist durch die Merkmale des Anspruchs 15 definiert. Indem der Kunststoffdübel mittels Spritzgiessen hergestellt wird und dessen Kammer bzw. Kammern danach mit Klebstoff gefüllt und anschliessend mittels eines Verschlussorgans hermetisch dicht verschlossen werden, kann die Dübelanordnung vergleichsweise einfach, kostengünstig und in wenigen Arbeitsschritten hergestellt werden..

Bei einem bevorzugten Verfahren wird die Kammer bzw. die Kammern des Kunststoffdübels mittels einer als Verschlussorgan dienenden Schraube hermetisch dicht verschlossen. Ein solches Verfahren eignet sich unter Berücksichtigung der Kosten in besonderer Weise zur Herstellung der Dübelanordnung.

Aus der nachfolgenden Detailbeschreibung und der Gesamtheit der Patentansprüche ergeben sich weitere vorteilhafte Ausführungsformen und Merkmalskombinationen der Erfindung.

Die Figuren der zur Erläuterung von Ausführungsbeispielen verwendeten Zeichnungen zeigen:
- Fig. 1: einen Kunststoffdübel in schematischer Darstellung;
- Fig. 2: den Dübel gemäss Fig. 1 in einem Längsschnitt;
- Fig. 3: einen Längsschnitt durch ein erstes Ausführungsbeispiel der Dübelanordnung mit einem Dübel gemäss Fig. 2;
- Fig. 4: einen Längsschnitt durch die Dübelanordnung gemäss Fig. 3 inklusive einer Schraube;
- Fig. 5: einen Längsschnitt durch die in eine Bohrung eingesetzte Dübelanordnung gemäss Fig. 4;
- Fig. 6: einen Längsschnitt durch ein zweites Ausführungsbeispiel der Dübelanordnung;
- Fig. 7: einen Längsschnitt durch einen weiteren Dübel zur Bildung einer Dübelanordnung;
- Fig. 8: einen Längsschnitt durch eine weiteres Ausführungsbeispiel der Dübelanordnung mit einem Dübel gemäss Fig. 7;
- Fig. 9: einen Längsschnitt durch einen Dübel zusammen mit einer Patrone zur Bildung einer Dübelanordnung mit einem 2K-Kleber;
- Fig. 10: einen Längsschnitt durch ein weiteres Ausführungsbeispiel der Dübelanordnung mit einem Dübel gemäss Fig. 9;
- Fig. 11: einen Längsschnitt durch ein weiteres Ausführungsbeispiel der Dübelanordnung mit einem Dübel gemäss Fig.9;
- Fig. 12: einen Längsschnitt durch ein weiteres Ausführungsbeispiel eines Dübels zur Bildung der Dübelanordnung;
- Fig. 12a: einen Querschnitt durch den Dübel gemäss Fig. 12;
- Fig. 13: ein weiteres Ausführungsbeispiel der Dübelanordnung;
- Fig. 14: ein weiteres Ausführungsbeispiel eines Dübels zur Bildung einer Dübelanordnung in nicht geschnittener Darstellung;
- Fig. 15: ein weiteres Ausführungsbeispiel eines Dübels in geschnittener Darstellung.

In den nachfolgenden Figurenbeschreibungen sind gleiche Teile grundsätzlich mit gleichen Bezugszeichen versehen.

Die Fig. 1 zeigt ein erstes Ausführungsbeispiel eines Kunststoffdübels in schematischer Darstellung. Der Kunststoffdübel 2 bildet einen Bestandteil der Dübelanordnung, welche nebst dem Kunststoffdübel 2 zumindest noch einen mit Klebstoff gefüllten Hohlraum/Kammer sowie ein Verschlussorgan aufweist.

Der nachfolgend zumeist als Dübel bezeichnete Kunststoffdübel 2 ist mit einer im Wesentlichen zylindrischen Mantelfläche 3 versehen, welche in einer vorderen Spitze 6 ausläuft. Auf der Rückseite weist der Dübel 2 einen ringförmigen Anschlagbund 7 auf. Vor diesem Anschlagbund 7 sind auf der Aussenseite der Mantelfläche 3 rippenartige Erhebungen 8 angeordnet, welche insbesondere als Verdrehsicherung dienen. Die Vorderseite 9 dieser rippenartigen Erhebungen 8 ist konisch ausgebildet, um das Einführen des Dübels 2 bzw. der rippenartigen Erhebungen 8 in eine Bohrung erleichtern. An der Mantelfläche 3 des Dübels sind ebenfalls Erhebungen 4 angeordnet, welche in axialer Richtung durch Vertiefungen 5 unterbrochen sind, so dass radiale Durchbrüche gebildet werden. Der Dübel 2 begrenzt in seinem Innern einen Hohlraum in der Form einer integralen Kammer (nicht ersichtlich), welche der Aufnahme des Klebstoffs dient. An der Mantelfläche 3 sind runde Bohrungen 12 erkennbar, welche Sollbruchstellen bilden, die beim Eindrehen einer Schraube aufreissen oder aufbrechen, so dass der in der Kammer aufgenommene Klebstoff austreten kann, wie nachfolgend noch näher erläutert wird. Der Dübel 2 besteht vorzugsweise aus einem thermoplastischen Kunststoff wie Polyamid und ganz besonders bevorzugt aus Polyamid 6 (PA 6). Vorzugsweise wird der Dübel 2 mittels Spritzgiessen hergestellt, wie nachfolgend noch näher erläutert wird.

Die Fig. 2 zeigt den Dübel gemäss Fig. 1 in einem Längsschnitt. Aus dieser Darstellung ist die im Innern des Dübels 2 angeordnete Kammer 11 erkennbar, welcher der Aufnahme des Klebstoffs dient. In dieser Darstellung sind die Sollbruchstellen 13 erkennbar, welche durch die radialen Bohrungen 12 gebildet werden, wobei auf der Innenseite der jeweiligen Bohrung 12 eine die Sollbruchstelle 13 bildende dünne Haut 14 mit einer Dicke in der Grössenordnung von einem bis zu einigen Zehntelmillimetern verbleibt. Die im Innern des Dübels gebildete Kammer 11 ist nach der Herstellung des Dübels -Spritzgiessvorgang- auf der Rückseite noch offen. Vor der genannten Kammer 11 ist noch eine Vorkammer 16 angeordnet, welche im Durchmesser etwas grösser ist als die Kammer 11.

Die Fig. 3 zeigt in einem Längsschnitt ein erstes Ausführungsbeispiel der Dübelanordnung 1 mit einem Dübel 2 gemäss den vorgängigen Figuren. Die Kammer 11 des Dübels 2 ist mit einem Klebstoff K gefüllt und mittels eines Verschlussorgans 17 verschlossen. Als Verschlussorgan kommt im vorliegenden Beispiel ein Stopfen 17 zur Anwendung, der in der Vorkammer 16 klemmend fixiert ist. Der Stopfen 17 ist derart ausgebildet, dass er einerseits den Innenraum -Kammer 11- des Dübels 2 mit dem darin aufgenommenen Klebstoff K hermetisch dicht verschliesst. Andererseits erlaubt der Stopfen 17, dass eine Schraube, beispielsweise eine Holz-, Dübel- oder Spax-Schraube, wie sie üblicherweise auch bei konventionellen Dübeln zum Einsatz kommt, den Stopfen 17 durchdringen kann. Jedenfalls kann ein derartige Dübelanordnung 1 vergleichsweise einfach hergestellt werden, zumal durch das Vorsehen einer integralen Kammer 11 keine separaten Behälter oder dergleichen zur Aufnahme des Klebstoffs K vorgesehen werden müssen.

Die Fig. 4 zeigt wiederum in geschnittener und schematischer Darstellung die Dübelanordnung 1 zusammen mit dem Vorderteil einer Schraube 18, wobei die Schraube 18 in einer Momentaufnahme beim Durchdringen des Verschlussorgans -Stopfen 17-dargestellt ist. Beim Hineindrehen der auf den Dübel 2 abgestimmten Schraube 18 wird das Verschlussorgan 17 von der Schraube 18 durchbohrt. Dabei dringt der Vorderteil der Schraube 18 in die mit Klebstoff K gefüllten Kammer 11 des Dübels 2 ein. Das Eindringen der Schraube 18 in Kammer 11 bewirkt einen Druckanstieg in der Kammer, was dazu führt, dass zumindest einzelne Sollbruchstellen 13 aufbrechen. Der Klebstoff K wird somit durch die in Kammer 11 eindringende Schraube 18 komprimiert, was zu einem Aufreissen von zumindest einer der Sollbruchstellen 13 führt.

Um zu Verhindern, dass nur eine Sollbruchstelle 13 aufbricht bzw. nur einige wenige Sollbruchstellen 13 aufbrechen, kann der Dübel 2 derart gestaltet sein, dass die Wandstärken der Sollbruchstellen -Verschlusshaut 14- von hinten nach vorne, d.h. in Richtung der Dübelspitze 6 ansteigen, was den Vorteil hat, dass bei einem Druckanstieg zuerst die hinteren Sollbruchstellen aufbrechen. Durch Eindrehen der Schraube 18 werden die Sollbruchstellen 13 von der Schraube 18 wiederum von hinten nach vorne nach und nach überdeckt, so dass mit zunehmendem Vordringen der Schraube 18 der Druck in der Kammer 11 wieder ansteigt, zumal die vor der Schraube 18 liegenden Sollbruchstellen 13 durch die ggf. zunehmende Dicke der Verschlusshaut 14 jeweils noch verschlossen sind. Vorzugsweise ist der Aussendurchmesser der Schraube 18 im Bereich des Gewindes grösser als der Innendurchmesser des Dübels 2, namentlich der Innendurchmesser der Kammer 11.

Der Durchmesser bzw. die Grösse der Sollbruchstellen 13 bzw. der aufgebrochenen Sollbruchstellen und die Viskosität des Klebers K sind vorzugsweise derart aufeinander abgestimmt, dass der Druck in der Kammer 11 auch dann bis zu einem gewissen Grad aufrechterhalten wird, wenn die erste Sollbruchstelle aufgebrochen ist, so dass der Druck nicht schlagartig abfällt. Zudem kann die Schraube 18 derart auf das Innere des Dübels 2 bzw. die Klebstoffkammer 11 abgestimmt sein, dass durch Eindrehen der Schraube 18 die Sollbruchstellen 13 von der Schraube 18 von hinten nach vorne nach und nach überdeckt werden, so dass mit zunehmendem Vordringen der Schraube 18 der Druck in dem sich vor der Schraube 18 befindlichen Teil der Kammer K wieder ansteigt, sofern die vor der Schraube 18 liegenden Sollbruchstellen 13 jeweils noch verschlossen sind. Die Viskosität des in der Kammer 11 aufgenommenen Klebstoffs K kann bei Raumtemperatur als zähflüssig bezeichnet werden.

Der Aussendurchmesser der Schraube 18 ist vorzugsweise so gewählt, dass die jeweilige Sollbruchstelle 13 beim Vordringen der Schraube 18 durch deren Gewinde mechanisch aufgebrochen wird, sofern sie nicht schon vorher durch den Druckanstieg aufgebrochen wurde. Dadurch wird bewirkt, dass zumindest im ersten Moment nach dem Aufbrechen der jeweiligen Sollbruchstelle Klebstoff über die gerade aufgebrochene Sollbruchstelle austreten kann. Mit dem weiteren Vordringen der Schraube 18 wird dann die jeweilige, durch die Schraube 18 aufgebrochene Sollbruchstelle wieder derart überdeckt, dass kein Klebstoff mehr über die zuletzt aufgebrochene, hinter der Schraubenspitze liegende Sollbruchstelle austreten kann. Ggf. kann auch die Schraube 18 derart gestaltet sein, beispielsweise durch das Vorsehen von in Längsrichtung und/oder in radialer Richtung verlaufenden Kanälen, dass über diese Kanäle auch nach dem Aufbrechen der jeweiligen Sollbruchstelle noch Klebstoff hinter die Schraubenspitze gelangen und über eine oder mehrere sich hinter der Schraubenspitze befindliche Sollbruchstellen aus der Kammer austreten kann.

Die Fig. 5 zeigt in einer Momentaufnahme das Eindringen der Schraube in den Dübel, wobei der Dübel soweit in eine Bohrung B, beispielsweise einer Mauer M, eingesteckt ist, dass er mit seinem Anschlagbund 7 auf der Aussenseite der Mauer M zur Anlage kommt. Durch das Eindringen der Schraube 18 in die Kammer 11 wurden einige der Sollbruchstellen bzw. der jeweiligen Verschlusshaut 14 aufgebrochen, was andeutungsweise erkennbar ist. Der in der Kammer 11 aufgenommene Klebstoff K tritt in radialer Richtung aus dem Dübel 2 aus und verteilt sich zwischen der äusseren Mantelfläche des Dübels 2 und der Wandung der Bohrung B, so dass der Dübel 2 nach dem Aushärten des Klebstoffs K fest in der jeweiligen Bohrung B verankert ist. Es versteht sich, dass der Kunststoffdübel 2 beim Eindrehen der Schraube 18 in radialer Richtung aufgeweitet wird, was in den vorliegenden Zeichnungen jedoch nicht entsprechend dargestellt ist.

Um eine möglichst gute Verteilung des austretenden Klebstoffs K zu gewährleisten, und zwar auch dann, wenn nur ein Teil oder einige wenige der Sollbruchstellen 13 aufbrechen, sind auf der Aussenseite des Dübels 2, insbesondere entlang der Mantelfläche, die eingangs genannten radial und axial verlaufenden Kanäle vorgesehen, entlang derer der Klebstoff K fliessen und sich verteilen kann.

Die Fig. 6 zeigt wiederum in schematischer Darstellung und in einem Längsschnitt ein alternatives Ausführungsbeispiel der Dübelanordnung 1. In diesem Beispiel wird das Verschlussorgan zum Verschliessen der Kammer 11 direkt durch eine Schraube 18a gebildet. Das heisst, die Dübelanordnung 1 umfasst neben dem eigentlichen Dübel 2 und dem in der Kammer 11 aufgenommenen Klebstoff K auch eine Schraube 18a. Die Schraube 18a dient in diesem Fall nicht nur als Verschlussorgan für die Kammer 11, sondern sie bildet gleichzeitig auch das Aufbrech- und Ausbringorgan für den Klebstoff K. Vorzugsweise ist die Schraube 18a derart ausgebildet, dass sie gleichzeitig auch als Befestigungs- und/oder Aufhängorgan für ein mittels des Dübels 2 in einer Mauer oder dergleichen zu befestigendem Objekt dient. Im Übrigen entspricht der Aufbau dieser Dübelanordnung im Wesentlichen der bereits vorgängig beschriebenen Dübelanordnung.

Um ggf. das Austauschen der als Verschlussorgan dienenden Schraube 18a gegen eine andersartig ausgebildete Schraube zu erleichtern, kann die Schraube 18a zumindest im vorderen Bereich mit einem das Anhaften des in der Kammer 11 aufgenommenen Klebstoffs K an der Schraube 18a verhindernden Trennmittel beschichtet sein. Eine solche Ausbildung begünstigt, dass die Bestandteil der Dübelanordnung 1 bildende Schraube 18a nach dem Verankern des Dübels 2 in einer Bohrung jederzeit leicht ausgetauscht werden kann, auch wenn der Kleber K sich bereits verfestigt hat. In diesem Fall dient die Schraube 18a primär dem Aufbrechen der Sollbruchstellen und dem zwangsweisen Herausdrücken des Klebstoffs aus der Kammer 11 bzw. aus den Kammern. Nach dem Verankern des Kunststoffdübels 2 in der Bohrung kann die Schraube 18a einfach und schnell gegen eine andere Schraube oder dergleichen, beispielsweise eine Kopfschraube gegen eine Hakenschraube oder ggf. auch gegen ein anderes Aufhänge- oder Verankerungselement, ausgetauscht werden.

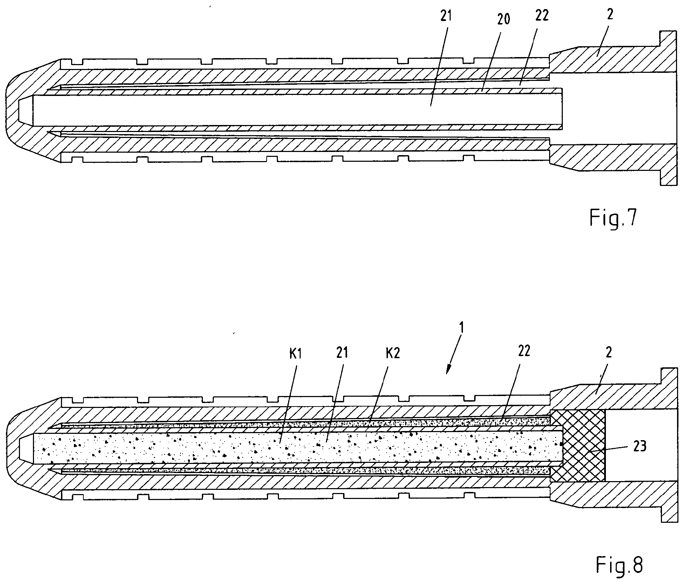

Die Fig. 7 zeigt einen Längsschnitt durch einen weiteren Kunststoffdübel 2 zur Bildung einer Dübelanordnung. Der Kunststoffdübel 2 ist in diesem Beispiel mit zwei Kammern 21, 22 zur Aufnahme von 2 Klebstoff-Komponenten versehen. Zur Bildung der inneren Kammer 21 ist der Dübel mit einem rohrförmigen Innenteil 20 versehen, der im Bereich der Dübelspitze fixiert ist. Dieser rohrförmige Innenteil 20 wird koaxial von einem ringförmigen Hohlraum umgeben, welcher die zweite Kammer 22 bildet. Der Dübel 2 weist vorzugsweise wiederum Sollbruchstellen auf, welche aus dieser Darstellung jedoch nicht ersichtlich sind. Der einstückig ausgebildete Dübel 2 mit seinen beiden Kammern 20, 22 wird vorzugsweise ebenfalls im Spitzgussverfahren hergestellt.

Fig. 8 zeigt die Dübelanordnung mit einem gemäss Fig. 7 ausgebildeten Dübel 2. Die beiden Kammern 21, 22 sind mittels eines gemeinsamen Verschlussorgans 23 hermetisch dicht verschlossen. In der inneren Kammer 21 ist eine erste Komponente K1 und in der äusseren Kammer 22 eine zweite Komponente K2 eines 2K-Klebstoffs aufgenommen. Zum Aufbrechen der Kammern 21, 22, zum Durchmischen der beiden Komponenten K1, K2 und zum Austragen der beiden Komponenten K1, K2 wird vorzugsweise wiederum eine Schraube verwendet, welche jedoch nicht dargestellt ist. Vorzugsweise wird eine derart auf die geometrischen Verhältnisse des Dübels 2 abgestimmte Schraube verwendet, dass zuerst ein Aufbrechen der inneren Kammer 21 gegenüber der äusseren Kammer 22 erreicht wird, so dass die beiden Komponenten K1, K2 miteinander vermischt werden können. Dabei dient die Schraube, namentlich deren Gewinde, als Mischorgan. Danach werden die radial nach aussen führenden Sollbruchstellen aufgebrochen, wobei dies wiederum mittels des Druckanstiegs des Klebstoffs und/oder mechanisch durch die Schraube erfolgen kann.

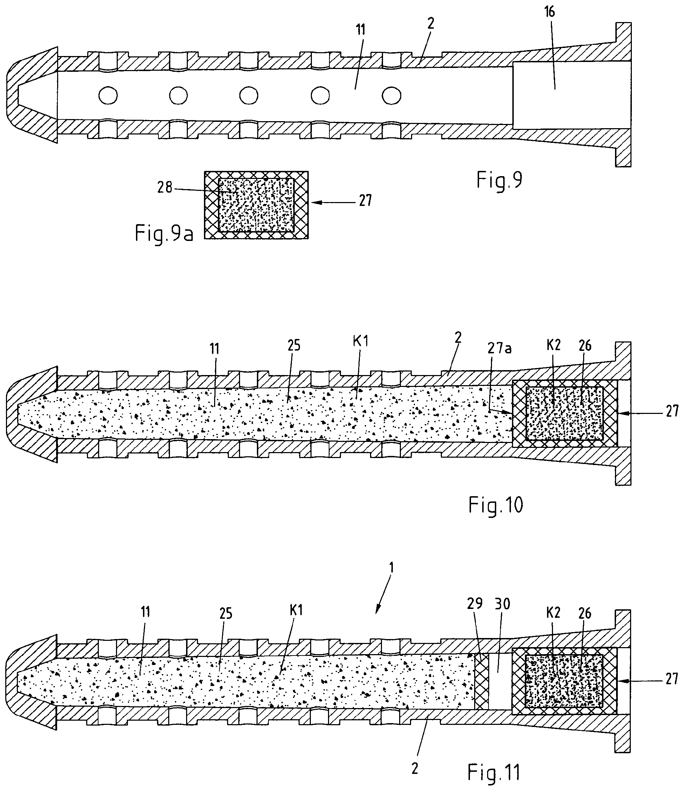

Die Fig. 9 zeigt einen Längsschnitt durch ein weiteres Ausführungsbeispiel eines Kunststoffdübels 2, der im Wesentlichen allerdings dem Dübel gemäss den Fig. 1 und 2 entspricht. Allerdings wird nachfolgend zur besseren Unterscheidung die vordere, grössere Kammer 11 als Hauptkammer bezeichnet. Hier dient die Vorkammer 16 des Dübels 2 der Aufnahme einer zweiten Klebstoffkomponente. Dazu kommt ein gemäss der Fig. 9a ausgebildetes Verschlussorgan in der Form einer Kapsel 27 zum Einsatz, deren Innenraum 28 der Aufnahme der genannten zweiten Klebstoffkomponente dient. Zur Bildung einer einsatzbereiten Dübelanordnung wird zuerst die Hauptkammer 11 des Dübels 2 mit der einen Klebstoffkomponente gefüllt. Der Dübel wird dazu vorzugsweise in eine vertikale Lage gebracht, in der seine Längsachse im Wesentlichen vertikal verläuft. Danach wird die Kapsel 27 in die Vorkammer 16 eingesetzt, so dass eine gemäss Fig. 10 ausgebildete Dübelanordnung 2 entsteht, wobei in der Hauptkammer 11 eine erste Komponente K1 und in der Kapsel 27 eine zweite Komponente K2 aufgenommen ist. Die Kapsel 27 ist dabei derart auf den Dübel 2 bzw. die Vorkammer 16 abgestimmt, dass sie die Hauptkammer 11 zusammen mit der darin aufgenommenen Komponente K1 hermetisch abdichtet. Die in der Kapsel 27 aufgenommene Klebstoffkomponente K2 ist ebenfalls hermetisch dicht darin verpackt.

Zum Durchmischen und Ausbringen -Herausdrücken- der beiden Klebstoffkomponenten K1, K2 kommt vorzugsweise wiederum eine Schraube (nicht dargestellt) zum Einsatz, welche von hinten in die Kapsel eingeschraubt wird. Beim Eindrehen der Schraube wird die als Trennwand zwischen den beiden Klebstoffkomponenten wirkende Vorderseite 27a der Kapsel aufgebrochen, so dass sich die beiden Komponenten vermischen können, was insbesondere wieder durch das Schraubengewinde bewerkstelligt wird. Sobald ein bestimmter Überdruck in der Hauptkammer 11 erreicht wird, werden die Sollbruchstellen in der bereits vorgängig beschriebene Art und Weise aufgebrochen, so dass der 2K-Klebstoff radial aus dem Dübel 2 austreten kann.

Die Fig. 11 zeigt ein alternatives Ausführungsbeispiel zu der Dübelanordnung gemäss Fig. 10. Der Aufbau ist dabei grundsätzlich identisch, indem in der Hauptkammer 11 die erste Klebstoffkomponente K1 und in der Vorkammer 16 die zweite in einer Kapsel 27 eingeschlossene Klebstoffkomponente K2 aufgenommen ist. Der Unterschied besteht darin, dass die in der Hauptkammer 11 aufgenommene Klebstoffkomponente K1 mittels eines separaten Verschlussorgans 29 verschlossen ist. Vorzugsweise ist zwischen dem genannten Verschlussorgan 29 und der Kapsel 27 ein Luftraum 30 vorgesehen, welcher eine Diffusion zwischen den beiden Klebstoffkomponenten K1, K2 verhindert. Eine solche Ausbildung kann in gewissen Fällen Vorteile in Bezug auf die Herstellung der Dübelanordnung 1 haben, da die Hauptkammer 11 nach dem Einfüllen der ersten Komponente K1 verschlossen werden kann. Ein zusätzlicher Vorteil des Ausführungsbeispiels gemäss Fig. 10, bei dem die in der Hauptkammer 11 aufgenommene Klebstoffkomponente K1 mittels eines separaten Verschlussorgans 29 verschlossen ist, besteht darin, dass anstelle einer Kapsel 27 eine Schraube zum Verschliessen der Vorkammer 16 mitsamt der darin aufgenommenen zweiten Klebstoffkomponente K2 zum Einsatz kommen kann. In diesem Fall kann gänzlich auf eine Kapsel verzichtet werden, wobei in diesem Fall dann natürlich kein Luftspalt/Luftraum mehr zwischen den beiden Komponenten K1, K2 vorhanden ist.

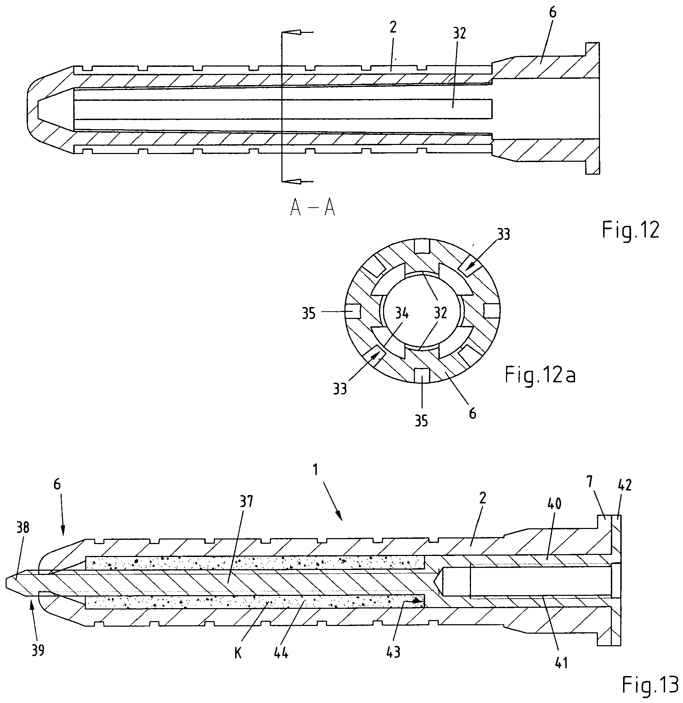

Die Fig. 12 zeigt ein weiteres, alternatives Ausführungsbeispiel eines Kunststoffdübels 2 im Längsschnitt, während die Fig. 12a diesen Dübel in vergrösserter Darstellung in einem Querschnitt entlang der Linie A-A in Fig. 12 zeigt. In diesem Beispiel ist der Dübel 2 auf der Innenseite mit Stegen 32 versehen und die Sollbruchstellen sind als dünne axial verlaufende Aufreissnähte 34 konzipiert, was durch in Längsrichtung des Dübels 2 verlaufende Vertiefungen 33 bzw. Schwächungen in der Wand des Dübels 2 erreicht wird, wie dies in der Fig. 12a erkennbar ist. In die Mantelfläche des Dübels 2 sind zudem Verteilkanäle 35 eingelassen. Der radiale Abstand zwischen einander gegenüberliegenden Stegen 32 ist dabei kleiner als der Aussendurchmesser der zum Einsatz kommenden Schraube (nicht dargestellt). Im Innern eines solchen Dübels 2 kann wiederum ein Klebstoff aufgenommen werden. Natürlich sind auch Ausführungsformen mit zwei Klebstoffen, wie sie vorgängig erläutert wurden, mit einem solchen Dübel grundsätzlich durchaus machbar. Durch den Spreizdruck beim Eindrehen einer Schraube reissen die Aufreissnähte 34 von hinten nach vorne auf, und der in dem Dübel 2 bzw. in der Kammer aufgenommene Klebstoff (nicht dargestellt) kann austreten. Durch die Verteilkanäle 35 fliesst der Kleber rund um den Dübel und benetzt komplett den Verankerungsgrund.

Die Fig. 13 zeigt ein weiteres, alternatives Ausführungsbeispiel einer Dübelanordnung 1. In diesem Beispiel umfasst die Dübelanordnung 1 neben dem eigentlichen Dübel 2 eine Langschraube 37. Die Langschraube 37 besitzt einen vorderen ersten Abschnitt 38, einen hinteren zweiten Abschnitt 40 und einen ringförmigen Schraubenbund 42, der sich am Bund 7 des Dübels in axialer Richtung abstützt. Der vordere Abschnitt 38 ist mit einem Aussengewinde 39 versehen und besitzt einen kleineren Durchmesser als der hintere Abschnitt 40. In den hinteren Abschnitt 40 der Langschraube 37 ist ein Innengewinde 41 eingelassen. Am Übergang vom vorderen Abschnitt 38 zum hinteren Abschnitt 40 wird eine Schulter 43 gebildet, welche als Begrenzung einer Kammer 44 zur Aufnahme eines Klebstoffs K dient. Der vordere Abschnitt 38 ist mit seinem vorderen Ende durch ein in der Spitze 6 des Dübels 2 angebrachtes Loch derart hindurchgeführt, dass das Aussengewinde 39 im Eingriff mit dem Dübel 2 steht. Der Dübel 2 selber ist wiederum mit Sollbruchstellen (nicht dargestellt) versehen, welche vorzugsweise als dünne axial verlaufende Aufreissnähte konzipiert sind. Sobald die Langschraube 37 gedreht wird, zieht es die Spitze 6 des Dübels 2 nach hinten in Richtung des Anschlagbunds 7. Dadurch reisst die Aufreissnaht des Dübels 2 auf und der Klebstoff K kann austreten. Durch weiteres drehen der Langschraube 37 zieht es die Spitze 6 des Dübels 2 immer weiter in Richtung des Bunds 7, sodass an den Abknickrillen Flügel entstehen. Mit diesen Flügeln kann sich der Dübel 2 am Ende derjenigen Bohrung, in die er eingesetzt ist, abstützen, wobei der Dübel 7 dazu länger sein muss als die genannte Bohrung. Dadurch kann sich der Dübel 2 beispielsweise an der Rückwand einer Leichtbauwand abstützen, wobei die Verankerung durch den austretenden Klebstoff zusätzlich unterstützt wird. Das in die Langschraube 37 eingelassene Innengewinde 41 kann zum Anschrauben eines Befestigungselements bzw. der eigentlichen Last genutzt werden.

Im Gegensatz zu den bekannten Dübeln für Leichtbauwände, welche wegen der erforderlichen Festigkeit aus Metall sind, kann die vorgeschlagene Variante viel kostengünstiger aus Kunststoff gefertigt werden, zumal durch den hart werdenden Klebstoff eine viel höhere Festigkeit erreicht wird als durch den Kunststoffdübel 2 alleine. Damit der austretende Klebstoff nicht nach unten fällt, kann optional ein netzartiges Gebilde (nicht dargestellt), ähnlich einem Damenstrumpf, über den Dübel 2 gezogen werden. Dadurch kann der austretende Klebstoff eine Art Halbkugel bilden, die einen grossen Hinterschnitt und somit grosse Festigkeit erzeugt.

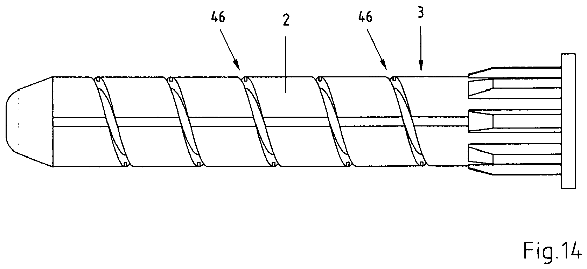

Die Figur 14 zeigt ein weiteres, alternatives Ausführungsbeispiel eines Dübels 2 für eine Dübelanordnung in einer Aussenansicht. Bei diesem Beispiel weist der Dübel 2 eine spiralförmig entlang der Mantelfläche 3 verlaufende Sollbruchstelle 46 auf, welche vorzugsweise durch eine entsprechende Nut gebildet wird. Die Nut weist eine derartige Tiefe auf, dass wiederum eine dünne Verschlusshaut entsteht. Im Innenraum des Dübels 2 ist dann in der bereits beschriebenen Weise entweder ein Einkomponenten oder ein aus zwei Komponenten bestehender Klebstoff aufgenommen, wobei als Verschlussorgan wiederum entweder ein Stopfen, eine Kapsel oder eine Schraube zum Einsatz kommen kann. Zum Austragen des Klebstoffs wird vorzugsweise eine Schraube eingesetzt, deren Aussendurchmesser grösser ist als der Innendurchmesser der Kammer. Auf diese Weise wird die Sollbruchstelle 46 beim Eindrehen der Schraube von hinten nach vorne nach und nach aufgerissen/aufgebrochen. Der Vorteil einer derart ausgebildeten Sollbruchstelle 46 besteht darin, dass der Klebstoff radial und axial über die Mantelfläche 3 verteilt aus dem Dübel 2 austritt und eine gute Benetzung der äusseren Mantelfläche des Dübels 2 mit Klebstoff erreicht werden kann.

Es versteht sich, dass ein gemäss der Figur 14 ausgebildeter Kunststoffdübel in beliebiger Kombination mit den vorgängig aufgezeigten Varianten von Verschlussorganen und Klebstoffen zu einer Dübelanordnung kombiniert werden kann. Ebenso können beispielsweise auch die auf der Innenseite der Kammer angeordneten Stege 32 gemäss Fig. 12a mit einem der in den anderen Beispielen gezeigten Kunststoffdübel kombiniert werden.

Sofern eine Schraube als Verschlussorgan eingesetzt wird, ist diese vorzugsweise als Kopfschraube ausgebildet. Dabei kommen beispielsweise Schrauben mit einem Halbrundkopf, Panhead, Sechskantkopf, Senkkopf, Senkfräskopf, Tellerkopf, Trompetenkopf, Linsensenkkopf (Senkrundkopf), Zierkopf, Zylinderkopf, Ringkopf, Hakenkopf oder einem Funktionskopf in Frage, wobei diese Aufzählung nicht als abschliessend zu betrachten ist. Der Vorteil einer mit einer Schraube versehenen Dübelanordnung besteht darin, dass die Schraube einerseits auf den Dübel abgestimmt ist und deren Schraubengewinde andererseits gleichzeitig als Transport- und Austragsorgan für den in der Kammer aufgenommenen Klebstoff dient. Sofern der Dübel der Dübelanordnung mit zwei Kammern und entsprechend 2 Klebstoffkomponenten versehen ist, dient die Schraube gleichzeitig auch als Mischorgan zum Durchmischen der beiden Komponenten. Das Schraubengewinde ist dabei in Bezug auf die Kammer bzw. Kammern mit den darin aufgenommenen Komponenten derart ausgebildet und abgestimmt, dass zuerst eine Durchmischung der beiden Komponenten stattfindet und die Hauptkammer erst dann aufreisst, wenn ein bestimmter Überdruck erreicht ist, wobei dieser Überdruck einhergeht mit einer bestimmten Durchmischung der beiden Komponenten. Das heisst mit anderen Worten, der 2-K Klebstoff kann erst dann aus dem Dübel austreten, wenn bereits eine gute Durchmischung der beiden Komponenten stattgefunden hat. Bevorzugt ist dazu nur die Hauptkammer mit Sollbruchstellen versehen, um sicherzustellen, dass die in der anderen Kammer aufgenommene Komponente nicht austreten kann, bevor sie in die Hauptkammer eingedrungen und mit der darin aufgenommenen Komponente vermischt ist. Wenn hier jeweils von Komponente K1 und K2 gesprochen wird, so ist darunter nicht zwingend zu verstehen, dass in der jeweiligen Kammer nur eine einzige Komponente aufgenommen ist, sondern der Ausdruck "Komponente K1" und "Komponente K2" steht auch stellvertretend für eine beliebige Kombination von ggf. mehreren Komponenten oder Bestandteilen in der jeweiligen Kammer.

Eine weitere Variante der Dübelanordnung besteht darin, dass in der Kammer ein Klebstoff aufgenommen ist, der vergleichsweise schnell aushärten kann, ohne dass eine komplette Durchmischung mit einem Härter nötig ist. Zum Beispiel durch radikalische Härtung ähnlich wie ungesättigte Polyester (UP). Diese werden z.B. mit Styrol gehärtet, das schon mit dem UP gemischt ist. Zum Start der Härtung kommt als Initiator beispielsweise Peroxid zum Einsatz. Daher kann der Schraubenschaft mit Peroxid vorbehandelt/beschichtet werden. Wenn die Schraube gleichzeitig als Verschlussorgan eingesetzt wird, muss darauf geachtet werden, dass die mit dem Klebstoff in Berührung stehende Verschlussspitze nicht mit dem genannten Initiator versehen ist. Beim Eindrehen der Schraube kommt dann der mit dem Initiator behandelte/beschichtete Schraubenschaft mit dem Klebstoff in Berührung und löst so die Härtung aus, die sich durch den gesamten Kleber fortsetzt. Sofern eine separate, nicht als Verschlussorgan wirkende Schraube eingesetzt wird, kann der gesamte Schraubenschaft inkl. der Schaftspitze mit einem Initiator vorbehandelt/beschichtet werden.

Anstelle der vorgängig gezeigten Dübel kann der Kunststoffdübel der Dübelanordnung grundsätzlich auch als Spreizdübel ausgebildet sein, so dass neben einer Verklebung zusätzlich auch eine mechanische Verankerung des Dübels im Bohrloch erreicht wird. Da die grundsätzliche Ausbildung eines Spreizdübels bekannt ist, wird auf dessen nähere Ausbildung nicht eingegangen.

Die Vorteile von erfindungsgemäss gestalteten Dübelanordnungen lassen sich wie folgt zusammenfassen:
- Der Dübel der Dübelanordnung hält sicher in unterschiedlichstem Mauerwerk;
- Die Dübelanordnung ist einfach und sicher in der Anwendung;
- Die Dübelanordnung kann kostengünstig gefertigt werden;
- Die Dübelanordnung kann sowohl mit einem 1K wie auch 2K Klebstoff versehen werden und ist daher universell einsetzbar;
- Die Anwendung der 2K-Ausführung ist ebenfalls sehr einfach;
- Sofern der Dübel als Spreizdübel ausgebildet ist, erfolgt die Verankerung mechanisch und durch Kleben, also redundant.
- Bei Verwendung einer Schraube als Verschlussorgan bekommt der Anwender ein fertiges Set, ohne dass er sich um die Schraube als solches kümmern muss.

## Patentansprüche

1. Dübelanordnung (1) mit einem Kunststoffdübel (2) zum Verankern in einer Bohrung und zumindest einem mit Klebstoff gefüllten Beutel oder zumindest einer mit Klebstoff gefüllten Kammer, welche(r) beim Eindrehen einer Schraube aufgebrochen wird, so dass der Klebstoff aus dem Kunststoffdübel (2) austreten kann, **dadurch gekennzeichnet, dass** der Kunststoffdübel (2) mit zumindest einer integralen Kammer (11) versehen ist, welche mit Klebstoff (K) gefüllt und mittels eines Verschlussorgans (17, 18) dicht verschlossen ist, wobei die Kammer (11) zumindest eine Sollbruchstelle (13) aufweist, welche derart ausgebildet ist/sind, dass sie beim Komprimieren des in der jeweiligen Kammer (11) aufgenommenen Klebstoffs (K) aufreisst/aufreissen und/oder durch Eindrehen einer Schraube (18) mechanisch aufgebrochen wird/werden.

2. Dübelanordnung (1) nach Anspruch 1, **dadurch gekennzeichnet, dass** der Kunststoffdübel (2) als Spreizdübel ausgebildet ist.

3. Dübelanordnung (1) nach Anspruch 1, **dadurch gekennzeichnet, dass** der Kunststoffdübel (2) mehrere in axialer Richtung über die Länge der Kammer (11) und/oder in radialer Richtung über den Umfang der Kammer (11) verteilte Sollbruchstellen (13) aufweist.

4. Dübelanordnung (1) nach Anspruch 1, **dadurch gekennzeichnet, dass** der Kunststoffdübel (2) zumindest eine geradlinig oder schraubenförmig entlang der Kammer verlaufende Sollbruchstelle (33, 46) aufweist.

5. Dübelanordnung (1) nach einem der vorhergehenden Ansprüche, **dadurch gekennzeichnet, dass** die jeweilige Sollbruchstelle (13, 33, 46) als von aussen in die Mantelfläche (3) des Kunststoffdübels (2) eingelassene Ausnehmung oder Vertiefung ausgebildet ist.

6. Dübelanordnung (1) nach einem der vorhergehenden Ansprüche, **dadurch gekennzeichnet, dass** das Verschlussorgan ein Stopfen (17) oder eine Schraube (18a) ist.

7. Dübelanordnung (1) nach einem der vorhergehenden Ansprüche, **dadurch gekennzeichnet, dass** die Dübelanordnung eine das Aufbrechen und Austragen des Klebstoffs bewirkende Schraube (18, 18a) umfasst, wobei der Klebstoff durch radikalische Härtung aushärtbar ist und der Schraubenschaft der Schraube (18, 18a) entweder zumindest teilweise mit einer das Aushärten des Klebstoffs initiierenden Schicht vorbehandelt oder beschichtet ist oder zumindest teilweise mit einem ein Anhaften des in der Kammer (11) aufgenommenen Klebstoffs (K) an der Schraube (18, 18a) verhindernden Trennmittel vorbehandelt oder beschichtet ist..

8. Dübelanordnung (1) nach einem der vorhergehenden Ansprüche, **dadurch gekennzeichnet, dass** das Verschlussorgan eine Schraube (18a) ist, deren Gewinde-Aussendurchmesser grösser ist als der Innendurchmesser der Kammer (11) des Kunststoffdübels (2).

9. Dübelanordnung (1) nach Anspruch 8, **dadurch gekennzeichnet, dass** die Schraube (18a) als Austragsorgan für den in der Kammer (11) aufgenommenen Klebstoff (K) dient.

10. Dübelanordnung (1) nach einem der vorhergehenden Ansprüche, **dadurch gekennzeichnet, dass** der Kunststoffdübel (2) entlang der äusseren Mantelfläche verlaufende axiale und/oder radiale Erhebungen (4) und/oder Vertiefungen (5) aufweist.

11. Dübelanordnung (1) nach einem der vorhergehenden Ansprüche, **dadurch gekennzeichnet, dass** der Kunststoffdübel (2) einstückig ausgebildet und auf der Aussenseite mit als Verdrehsicherung dienenden Erhebungen (8) versehen ist.

12. Dübelanordnung (1) nach einem der vorhergehenden Ansprüche, **dadurch gekennzeichnet, dass** der Kunststoffdübel (2) zwei axial hintereinander angeordnete Kammern (11, 16) aufweist, wobei die vordere Kammer (25) der Vorderseite des Dübels (2) zugewandt ist, während die hintere Kammer (26) der Rückseite des Dübels (2) zugewandt ist, und wobei in der vorderen Kammer (25) eine erste Komponente (K1) und in der zweiten Kammer (16) eine weitere Komponente (K2) zur Bildung eines 2-K Klebstoffs aufgenommen ist.

13. Dübelanordnung (1) nach einem Anspruch 12, **dadurch gekennzeichnet, dass** in die hintere, der Rückseite des Dübels (2) zugewandte Kammer (26) eine mit der weiteren Komponente (K2) gefüllte Patrone (27) eingesetzt ist, wobei die Patrone (27) gleichzeitig als Verschlussorgan für die vordere Kammer (25) ausgebildet ist.

14. Dübelanordnung (1) nach Anspruch 13, **dadurch gekennzeichnet, dass** die hintere, der Rückseite des Dübels (2) zugewandte Kammer (26) mittels einer Schraube verschlossen ist, wobei die Schraube als Mischorgan zum Durchmischen und Austragen der beiden Komponenten dient.

15. Verfahren zum Herstellen einer Dübelanordnung (1), mit einem Kunststoffdübel (2), zumindest einer mit Klebstoff gefüllten Kammer (11) und einem die Kammer verschliessenden Verschlussorgan, **dadurch gekennzeichnet, dass** der Kunststoffdübel (2) mittels Spritzgiessen hergestellt wird, dass danach die Kammer bzw. die Kammern des Kunststoffdübels mit Klebstoff gefüllt und anschliessend die Kammer(n) mittels des Verschlussorgans hermetisch dicht verschlossen werden.

16. Verfahren nach Anspruch 15, **dadurch gekennzeichnet, dass** die Kammer bzw. die Kammern des Kunststoffdübels mittels einer als Verschlussorgan dienenden Schraube (18) hermetisch dicht verschlossen wird/werden.
